(19) Europäisches Patentamt
European Patent Office
Office européen des brevets

(11) **EP 3 366 431 B1**

(12) **EUROPÄISCHE PATENTSCHRIFT**

(45) Veröffentlichungstag und Bekanntmachung des Hinweises auf die Patenterteilung:
**07.08.2019   Patentblatt 2019/32**

(51) Int Cl.:
**B25J 9/00** (2006.01)   **B25J 13/08** (2006.01)

(21) Anmeldenummer: **18154755.5**

(22) Anmeldetag: **01.02.2018**

(54) **FÖRDERVORRICHTUNG ZUM BEFÖRDERN VON OBJEKTEN UND/ODER PERSONEN**

CONVEYOR DEVICE FOR CONVEYING OBJECTS AND/OR PERSONS

DISPOSITIF DE TRANSPORT D'OBJETS ET/OU DE PERSONNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2017   EP 17157443**

(43) Veröffentlichungstag der Anmeldung:
**29.08.2018   Patentblatt 2018/35**

(73) Patentinhaber: **SICK STEGMANN GmbH**
**78166 Donaueschingen (DE)**

(72) Erfinder: **Sellmer, Christian**
**78166 Donaueschingen (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**WO-A1-2016/126173     DE-A1-102010 015 530**
**DE-T5-112011 103 897   US-A1- 2013 292 543**

**Beschreibung**

Die Erfindung betrifft eine Fördervorrichtung zum Befördern von Objekten und/oder Personen gemäß dem Oberbegriff des Anspruchs 1.

Eine solche Fördervorrichtung ist aus der DE 10 2010 015 530 A1 bekannt.

Heutzutage wird beispielsweise untersucht, in Hochregallagern Fördervorrichtungen, insbesondere in Form eines sogenannten Seilroboters, einzusetzen, um Objekte aus bzw. in Regalfächern des Hochregallagers zu befördern. Hierbei wird eine Transportplattform zu dem jeweiligen Regalfach bewegt, aus bzw. in dem das Objekt ent- bzw. beladen wird. Die Transportplattform ist über Verbindungsseile mit Antriebsmotoren verbunden, wobei die Verbindungsseile auf Winden aufgewickelt sind und mittels Seilrollen umgelenkt werden.

Die Antriebsmotoren drehen die Winden, so dass die Verbindungsseile auf- bzw. abgewickelt werden, wodurch die Transportplattform in eine entsprechende Position gegenüber den Regalfächern des Hochregallagers bewegt wird. Diese Fördervorrichtung hat den immensen Vorteil gegenüber herkömmlichen Hochregallager-Fördervorrichtungen, dass ein wesentlich besseres Verhältnis Nutzlast zur bewegten Gesamtmasse erzielbar ist.

Solch eine Fördervorrichtung kann auch dazu dienen, eine auf der Transportplattform platzgenommene Person zu befördern. Hierbei wird die Transportplattform, wie bereits erläutert, durch Auf- bzw. Abwickeln der Verbindungsseile auf bzw. von den Winden in die vorgesehene Position bewegt.

Bei beiden genannten Anwendungsbeispielen der Fördervorrichtung ist eine genaue Pose und Orientierung der Transportplattform im Raum für die Positionierung der Transportplattform unabdingbar und von großer Bedeutung.

Hierzu werden aus Daten der Antriebsmotoren die Verbindungsseillängen ermittelt, woraus eine Absolutposition der Transportplattform im Raum berechnet wird.

Bei der Berechnung der Pose und Orientierung der Transportplattform aus der Verbindungsseillänge fließen zusätzliche Wegstrecken ein, die weitere Fehlereinflüsse für die Berechnung der Verbindungsseillängen bedeuten. So beinhalten die Verbindungsseillängen, die aus den Daten der Antriebsmotoren berechnet werden, auch die Strecke von der Winde bis zu den Seilrollen. Auch die Auf- bzw. Abwicklung des Verbindungsseils auf der Winde fließt in die Verbindungsseillängenberechnung ein und muss später aufwändig herausgerechnet werden, soweit möglich.

Ferner weist jedes Verbindungsseil eine eigene Elastizität auf, die eine kraftabhängige und umgebungsbedingungsabhängige Längenänderung bewirkt und somit einen Einfluss auf die Berechnung der Verbindungsseillänge bzw. der Pose und Orientierung der Transportplattform besitzt. Hierbei können Umgebungsbedingungen beispielsweise Temperaturänderungen sein.

Diese Faktoren bewirken eine nicht zufriedenstellende und ungenaue Bestimmung der Pose und Orientierung der Transportplattform.

Gemäß der DE 10 2010 015 530 A1 erfolgt das Auf- und Abwickeln der Verbindungsseile unter Berücksichtigung der Winkeländerungen gegenüber der Horizontalen oder Vertikalen, welche die Verbindungsseile längs des Wegs der Transportplattform durchlaufen.

Es ist eine Aufgabe der Erfindung, eine Fördervorrichtung zum Befördern von Objekten und/oder Personen zur Verfügung zu stellen, bei der eine präzise Bestimmung einer Pose der Transportplattform, insbesondere im zweidimensionalen Raum, der Fördervorrichtung erzielbar ist.

Die Aufgabe wird erfindungsgemäß gelöst durch eine Fördervorrichtung zum Befördern von Objekten und/oder Personen gemäß Anspruch 1, mit einer Transportplattform, auf der das Objekt und/oder die Person positionierbar ist, mindestens vier Antriebsmotoren, die die Transportplattform bewegen, mindestens sechs Verbindungsseilen, die die Transportplattform mit den Antriebsmotoren verbindet, wobei die Transportplattform durch Auf- bzw.

Abwickeln der jeweiligen Verbindungsseile mittels der Antriebsmotoren in eine gewünschte Position bewegbar ist, einer Steuerung, die die Antriebsmotoren ansteuert und mindestens zwei Winkelsensoren, wobei je ein Winkelsensor an einem jeweiligen Verbindungsseilende an der Transportplattform angeordnet ist, und jeder Winkelsensor einen Winkel zwischen dem jeweiligen Verbindungsseil und einer jeweiligen senkrechten Kante der Transportplattform als Winkelsignal an die Steuerung kommuniziert.

Hieraus ergibt sich der Vorteil, dass die Verbindungsseillängen keinen Einfluss auf die Bestimmung der Pose und Orientierung der Transportplattform der Fördervorrichtung haben.

Gemäß einem bevorzugten Ausführungsbeispiel umfasst die Fördervorrichtung einen Seilroboter. Dies hat den Vorteil, dass die Fördervorrichtung ein hervorragendes Verhältnis Nutzlast zur bewegten Gesamtmasse aufweist.

Gemäß einem bevorzugten Ausführungsbeispiel sind drei Winkelsensoren vorgesehen, wobei von den drei Winkelsensoren ein Winkelsensor zum Bestimmen eines Winkels zwischen einer Horizontalen und einer Orientierung der Transportplattform ausgelegt ist. Hierdurch ist eine Verkippung der Transportplattform vorteilhafterweise bestimmbar. Vorteilhafterweise sind mindestens sechs Winkelsensoren vorgesehen, die zur präzisen Bestimmung der Position und einer Orientierung der Transportplattform dienen.

Gemäß einem weiteren bevorzugten Ausführungsbeispiel umfasst der Winkelsensor einen Drehgeber oder eine inertiale Messeinheit. Vorteilhafterweise umfasst der Drehgeber einen Single- oder Multiturn-Absolut-Drehgeber und die inertiale Messeinheit besteht aus einer Kombination aus einem dreiachsigen Beschleunigungssensor, insbesondere einem Neigungssensor und einem dreiachsigen Drehratensensor.

Gemäß einem weiteren bevorzugten Ausführungsbeispiel umfasst die Transportplattform einen Käfig, in dem das Objekt mittels Aktoren be- und entladbar ist oder die Person Platz nimmt. Hierbei dient der Käfig als sogenannter Endeffektor der Fördervorrichtung bzw. als Plattform für einen Simulator.

Zusätzlich umfassen vorteilhafterweise die Antriebsmotoren jeweils ein Motorfeedbacksystem, das Daten zur Bestimmung der bewegten Verbindungsseillänge liefert. Hierdurch ist es möglich die Verbindungsseillänge mit den Winkeln der Verbindungsseile zu kombinieren, so dass eine noch höhere Genauigkeit erreichbar ist.

Gemäß einem weiteren bevorzugten Ausführungsbeispiel sind mindestens sechs Seilrollen vorgesehen, die die Verbindungsseile umlenken. Vorteilhafterweise ist in jeder Seilrolle ein Multiturn-Drehgeber vorgesehen, der Daten zur Bestimmung der bewegten Verbindungsseillänge zwischen der Transportplattform und der Seilrolle liefert. Hierdurch ergibt sich der Vorteil, dass mehr Daten für eine genauere Bestimmung der Pose und Orientierung der Transportplattform zur Verfügung stehen.

Weiterhin ist gemäß einem weiteren bevorzugten Ausführungsbeispiel die Steuerung derart ausgelegt, dass die Daten der Winkelsensoren, des Motorfeedbacksystems und der Multiturn-Drehgeber der Seilrollen zur Bestimmung der Position der Transportplattform kombinierbar sind. Hierdurch ergibt sich der Vorteil, dass eventuelle Verkippung der Transportplattform mitberücksichtigt werden kann und damit eine noch genauere Bestimmung der Pose und Orientierung der Transportplattform möglich ist.

Die Steuerung ist ferner vorteilhafterweise derart ausgelegt, dass die Transportplattform in vorgegebenen Positionen bewegbar ist und die Winkelsensoren in den vorgegebenen Positionen kalibrierbar sind. Hierbei ist insbesondere ein externes Referenz-Erfassungssystem vorgesehen, das eine genaue Positionierung der Transportplattform in den vorgegebenen Positionen erfasst und gegenüber der Steuerung bestätigt. Dadurch ist die Fördervorrichtung exakt kalibriert und kann im Betrieb genau positioniert werden.

Gemäß einem weiteren bevorzugten Ausführungsbeispiel umfasst das Referenz-Erfassungssystem eine Kamera und Marker, wobei die Kamera beabstandet von der Transportplattform und die Marker an der Transportplattform angeordnet sind oder vice versa.

Insbesondere ist die Steuerung derart ausgelegt, dass Daten des Referenz-Erfassungssystems in einer Tabelle anlegbar sind, eine Nachkalibrierung der Winkelsensoren mittels eines Vergleichs mit aktuellen Daten durchführbar ist und die in der Tabelle angelegten Daten aktualisierbar sind. Hierdurch ist eine dauerhafte genaue Positionierung der Transportplattform gewährleistet.

Die erfindungsgemäße Fördervorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1     eine schematische Darstellung eines bevorzugten Ausführungsbeispiels einer erfindungsgemäßen Fördervorrichtung;

Fig. 2     eine schematische Darstellung eines weiteren bevorzugten Ausführungsbeispiels der erfindungsgemäßen Fördervorrichtung;

Fig. 3     eine schematische Darstellung der erfindungsgemäßen Fördervorrichtung verkippungsfrei im zweidimensionalen Raum in Bezug auf ein Bezugskoordinatensystem; und

Fig. 4     eine schematische Darstellung der erfindungsgemäßen Fördervorrichtung mit einer Verkippung um einen Winkel $\gamma$ im zweidimensionalen Raum in Bezug auf ein Bezugskoordinatensystem.

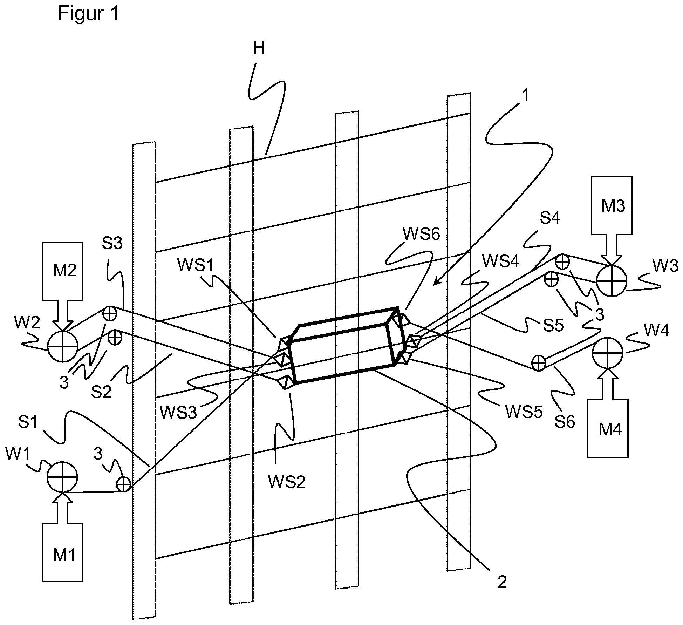

In der Figur 1 ist eine schematische Darstellung eines ersten Ausführungsbeispiels einer erfindungsgemäßen Fördervorrichtung 1 zum Befördern von Objekten gezeigt, die aus einem sogenannten Seilroboter besteht.

Die erfindungsgemäße Fördervorrichtung 1 umfasst eine Transportplattform 2, auf der ein Objekt positionierbar ist. Die Fördervorrichtung 1 in dem gezeigten Ausführungsbeispiel ist als Endeffektor eines Hochregallagers H gezeigt, bei dem die Transportplattform 2 der Fördervorrichtung 1 vor Regalfächern des Hochregallagers H positionierbar ist, um Objekte aus der Transportplattform 2 zu entladen oder in die Transportplattform 2 zu beladen.

Die Transportplattform 2 ist mittels sechs Verbindungsseilen S1 bis S6 mit vier Antriebsmotoren M1 bis M4 verbunden, wobei die Verbindungsseile S1 bis S6 auf jeweilige Winden W1 bis W4 aufgewickelt sind. Die Antriebsmotoren M1 bis M4 treiben die jeweilige Winde W1 bis W4 derart an, dass die auf der jeweiligen Winde W1 bis W4 aufgewickelten Verbindungsseile S1 bis S6 ab- bzw. aufgewickelt werden, so dass die Transportplattform 2 in eine gewünschte Position gegenüber einem Regalfach des Hochregallagers H bewegt wird.

Hierbei sind die Verbindungsseile S2 und S3 auf die Winde W2 und die Verbindungsseile S4 und S5 auf die Winde W3 aufgewickelt. Die Winde W2 wird durch den Antriebsmotor M2 angetrieben und die Winde W3 wird durch den Antriebsmotor M3 angetrieben. Die vier genannten Verbindungsseile S2, S3, S4 und S5 sind an vier Ecken einer Bodenplatte der Transportplattform 2 angeordnet, so dass diese Verbindungsseile S2, S3, S4 und S5 im Wesentlichen die Bodenplatte der Transportplattform 2 bewegt.

Das Verbindungsseil S1 ist auf die Winde W1 aufgewickelt, die durch den Antriebsmotor M1 angetrieben wird. Das Verbindungsseil S6 ist die Winde W4 aufgewickelt, die ebenfalls durch den eigenen Antriebsmotor M4 angetrieben wird. Diese beiden Verbindungsseile S1 und S6 sind an zwei gegenüberliegenden Kanten einer Kopfplatte der Transportplattform 2 angeordnet, so dass die Verbindungsseile S1 und S6 die Kopfplatte der Transportplattform 2 synchron zu der Bodenplatte der Transportplattform 2 bewegen.

Gemäß dem Ausführungsbeispiel sind die sechs Verbindungsseile S1 bis S6 jeweils an einem Verbindungsseilende mit einem Winkelsensor WS1 bis WS6 versehen, so dass jedes Verbindungsseilende jeweils ein Winkelsensor WS1 bis WS6 an der Transportplattform 2 aufweist. Mit anderen Worten, je ein Winkelsensor WS1 bis WS6 ist an je einem Verbindungsseilende an der Transportplattform 2 angeordnet. Hierbei kann der Winkelsensor WS1 bis WS6 als direkte Verbindung zwischen dem jeweiligen Verbindungsseilende und der Transportplattform 2 dienen oder in eine Verbindungseinheit zwischen dem jeweiligen Verbindungsseilende und der Transportplattform 2 integriert sein.

Jeder Winkelsensor WS1 bis WS6 bestimmt und kommuniziert einen Winkel zwischen dem jeweiligen Verbindungsseil S1 bis S6 und einer jeweiligen senkrechten Kante der Transportplattform 2 als Winkelsignal an eine nicht gezeigte Steuerung, die eine absolute Pose und eine Orientierung der Transportplattform 2 im dreidimensionalen Raum errechnet und die Antriebsmotoren M1 bis M4 entsprechend ansteuert, so dass die Transportplattform 2 präzise vor einem gewünschten Regalfach des Hochregallagers positionierbar ist.

Durch die direkte Anordnung der Winkelsensoren WS1 bis WS6 an der Transportplattform 2 und den Enden der jeweiligen Verbindungsseilen S1 bis S6 kann ein Einfluss der Verbindungsseillängen, die Elastizität der Verbindungsseile S1 bis S6 und die Bewegung der Verbindungsseile S1 bis S6 im Allgemeinen auf die Berechnung der Pose und Orientierung der Transportplattform 2 vermieden werden. Insbesondere sind die Verbindungsseile S1 bis S6 durch Seilrollen 3a bis 3f umgelenkt, so dass eine durch die Umlenkung mögliche Ungenauigkeit bei der Bestimmung der Pose und Orientierung der Transportplattform 2 vernachlässigt werden kann.

Vorzugsweise ist der Winkelsensor WS1 bis WS6 ein Drehgeber oder eine inertiale Messeinheit, wobei der Drehgeber, insbesondere einen Single- oder Multiturn-Absolut-Drehgeber umfasst und die inertiale Messeinheit, insbesondere aus einer Kombination aus einem dreiachsigen Beschleunigungssensor, insbesondere einem Neigungssensor und einem dreiachsigen Drehratensensor besteht.

Die Transportplattform 2 des gezeigten Ausführungsbeispiels umfasst einen Käfig, in dem das Objekt mittels Aktoren be- und entladbar ist. Die Transportplattform 2 kann gemäß einem nicht gezeigten Ausführungsbeispiel auch aus einem derart gestalteten Käfig bestehen, in dem eine Person Platz nehmen kann. Das heißt, die Transportplattform 2 dient als sogenannter Endeffektor der Fördervorrichtung 1 bzw. als Plattform für einen Simulator.

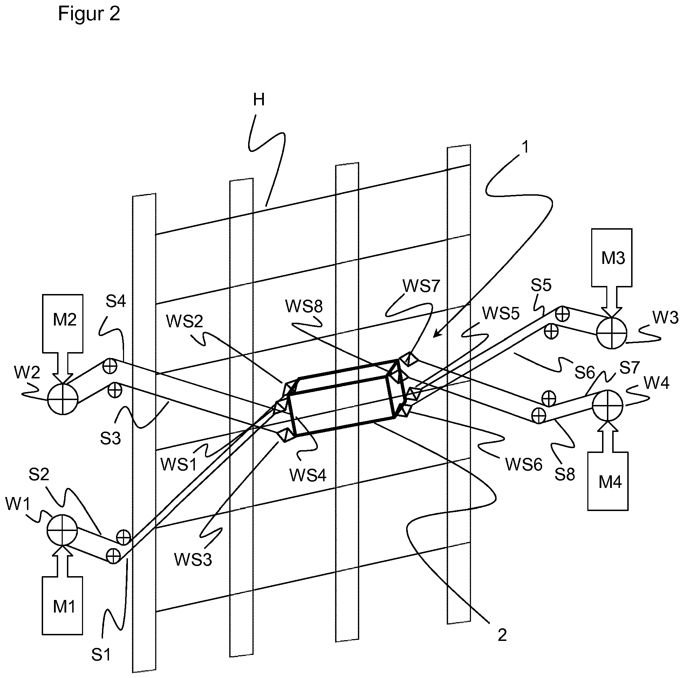

Bei der schematischen Darstellung eines weiteren bevorzugten Ausführungsbeispiels einer erfindungsgemäßen Fördervorrichtung 1, insbesondere in Form eines Seilroboters in der Figur 2, ist die Transportplattform 2 mittels acht Verbindungsseilen S1 bis S8 mit vier Antriebsmotoren M1 bis M4 verbunden.

Hierbei sind jeweils zwei Verbindungsseile S1 und S2, S3 und S4, S5 und S6 sowie S7 und S8 als Paar auf eine jeweilige Winde W1 bis W4 aufgewickelt, die von den jeweiligen Antriebsmotoren M1 bis M4 angetrieben werden. Die Paare von Verbindungsseilen S1 und S2, S3 und S4, S5 und S6 sowie S7 und S8 sind an Ecken einer gemeinsamen waagerechten Kante der Transportplattform 2 verbunden.

Gemäß dem Ausführungsbeispiel ist je ein Winkelsensor WS1 bis WS8 an je einem Verbindungsseilende eines Verbindungsseils S1 bis S8 an der Transportplattform 2 angeordnet. Das heißt, in diesem Ausführungsbeispiel sind acht Winkelsensoren WS1 bis WS8 vorgesehen. Die acht Winkelsensoren WS1 bis WS8 liefern jeweils ein Winkelsignal an die nicht dargestellte Steuerung, so dass die Steuerung die Pose und Orientierung der Transportplattform 2 noch präziser ermitteln kann.

Um eine noch genauere und stabilere Fördervorrichtung 1 zu erhalten, kann vorteilhafterweise für jedes Verbindungsseil S1 bis S8 eine separate Winde mit eigenem Antriebsmotor vorgesehen sein, so dass bei dem Ausführungsbeispiel der Figur 2 beispielsweise acht Winden und acht Antriebsmotoren anstatt die dargestellten vier Winden W1 bis W4 und vier Antriebsmotoren M1 bis M4 angeordnet sein können. Zusätzlich ermöglicht die voneinander völlig unabhängige Ansteuerung der Verbindungsseile S1 bis S8 eine erhöhte Flexibilität der Fördervorrichtung 1 im Raum.

Für die Bestimmung der Pose der Transportplattform 2 im zweidimensionalen Raum sind erfindungsgemäß lediglich zwei Winkelsignale, das heißt zwei Winkelsensoren, notwendig. Um eine Verkippung, das heißt ein Winkel zwischen einer Horizontalen und der Orientierung der Transportplattform 2 zu bestimmen, wird gemäß einem Ausführungsbeispiel ein weiteres Winkelsignal benötigt.

Im dreidimensionalen Raum werden sechs Winkelsignale, das heißt sechs Winkelsensoren, benötigt. In Figur 1 sind sechs Winkelsensoren WS1 bis WS6 vorgesehen, so dass eine präzise Bestimmung der Pose und Orientierung der Transportplattform 2 im dreidimensionalen Raum möglich ist. In Figur 2 sind acht Winkelsensoren WS1 bis WS8 vorgesehen, so dass das überbestimmte System eine Kombination der Winkelsignale mittels geeigneten Sensordatenfusionsalgorithmen eine Erhöhung der Genauigkeit der Bestimmung der Pose und Orientierung der Transportplattform 2 ermöglicht.

Vorteilhafterweise ist es auch möglich, je nach Position der Transportplattform 2 in Bezug auf das Hochregallager H die Winkelsignale bestimmter Winkelsensoren WS1 - WS3 oder WS4 - WS6 in Figur 1 bzw. WS1 - WS4 oder WS5 - WS8 in Figur 2 zur Bestimmung der Absolutposition und Orientierung der Transportplattform 2 im Raum zu nutzen. Das heißt, beispielsweise befindet sich die Transportplattform 2 näher zu einer linken Seite des Hochregallagers H und somit weiter weg von einer rechten Seite des Hochregallagers H, so eignen sich die Winkelsignale der auf der linken Seite der Transportplattform 2 angeordneten Winkelsensoren, WS1 bis WS3 in Figur 1 bzw. WS1 - WS 4 in Figur 2, besser zur Bestimmung der Absolutposition und Orientierung der Transportplattform 2, da die Winkelsignale der auf der rechten Seite der Transportplattform 2 angeordneten Winkelsensoren, WS4 - WS6 in Figur 1 bzw. WS5 - WS8 in Figur 2, aufgrund der größeren Verbindungsseillängen ungenauer sind. Durch eine Kombination aller Winkelsignale lässt sich im Ganzen die Genauigkeit verbessern.

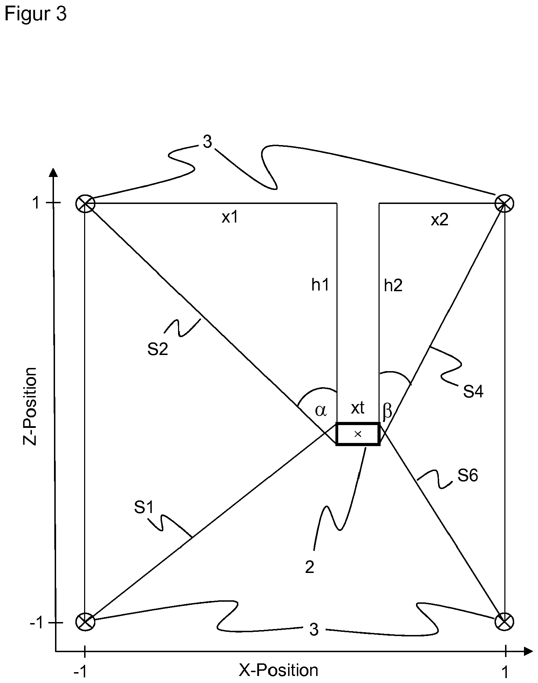

Eine erfindungsgemäße Bestimmung der Pose der Transportplattform 2 im zweidimensionalen Raum soll folgend anhand der Figur 3 erläutert werden, in der die Transportplattform 2 schematisch im zweidimensionalen Raum in Bezug auf ein Bezugskoordinatensystem dargestellt ist. Hierbei wird eine verkippungsfreie Pose der Transportplattform 2 vorausgesetzt.

Die Transportplattform 2 ist an den Verbindungsseilen S1 bis S4 aufgehängt, wobei die Verbindungsseillängen der Verbindungsseile S1 bis S4 zwischen der Transportplattform 2 und den Seilrollen 3 dargestellt sind.

Ferner werden die Winkel $\alpha$, zwischen dem Verbindungsseil S2 und der linken senkrechten Kante der Transportplattform 2, und $\beta$, zwischen dem Verbindungsseil S4 und der rechten senkrechten Kante der Transportplattform 2, zur Bestimmung der Absolutposition der Transportplattform 2 verwendet, so dass sich die Position der Transportplattform 2 aus folgenden drei Gleichungen ergibt:

$$\tan \alpha = x1 / h1 \qquad (1)$$

$$\tan \beta = x2 / h2 \qquad (2)$$

$$x \text{ (gesamt)} = x1 + x2 + xt \qquad (3),$$

wobei x1 bzw. x2 einen horizontalen Abstand von der linken bzw. rechten oberen Seilrolle 3 zu der linken bzw. rechten senkrechten Kante der Transportplattform 2 und xt eine Breite der Transportplattform 2 darstellen. h1 und h2 stellen jeweils den vertikalen Abstand der Transportplattform 2 zu den oberen Seilrollen 3 dar.

Hieraus folgt:

$$h1 = x \text{ (gesamt)} / (\tan \alpha + \tan \beta) \qquad (4)$$

$$x1 = h1 * \tan \alpha \qquad (5)$$

$$x2 = h1 * \tan \beta \qquad (6).$$

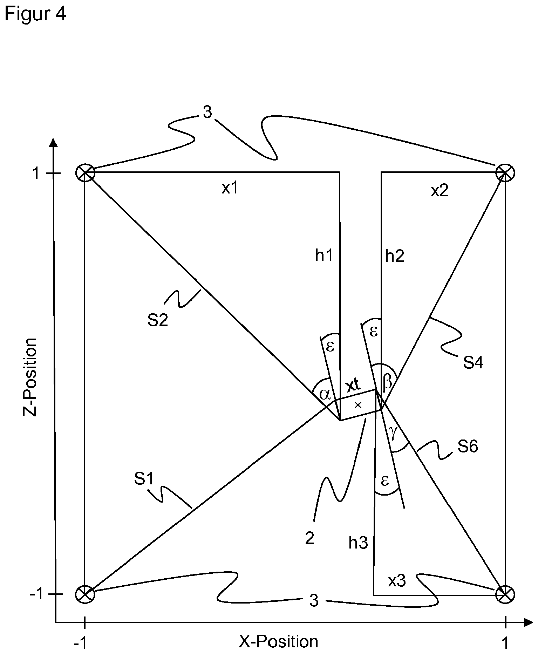

Bei einer Verkippung der Transportplattform 2 um einen Winkel $\varepsilon$ im zweidimensionalen Raum, wie in der Figur 4 dargestellt, wird vorteilhafterweise ein drittes Winkelsignal zur exakten Bestimmung der Absolutposition und Orientierung der Transportplattform 2 benötigt. Hierzu müssen die folgenden Gleichungen gelöst werden:

$$\tan \alpha + \varepsilon = x1 / h1 \qquad (7)$$

$$\tan \beta - \varepsilon = x2 / h2 \qquad (8)$$

$$\tan \gamma + \varepsilon = x3 / h3 \qquad (9).$$

Dieses Gleichungssystem kann bei Berücksichtigung der Position der Seilrollen 3 numerisch gelöst werden und liefert entsprechend die Absolutposition und den Verkippungswinkel $\varepsilon$ der Transportplattform 2.

Wie bereits erwähnt, ist die Bestimmung der Pose und Orientierung der Transportplattform 2 im dreidimensionalen Raum durch das Vorsehen von mindestens sechs Winkelsensoren WS1 bis WS6 genau bestimmbar.

Vorteilhafterweise umfassen die Antriebsmotoren M1 bis M4 jeweils ein Motorfeedbacksystem, das Daten zur Bestimmung der bewegten Verbindungsseillänge liefert. Ferner kann in jeder Seilrolle 3 ein Multiturn-Drehgeber vorgesehen sein, der ebenfalls Daten zur Bestimmung der bewegten Verbindungsseillänge zwischen der Transportplattform 2 und den Seilrollen 3 liefert. Diese Daten können bei der Bestimmung der Pose und Orientierung der Transportplattform 2 mitberücksichtigt werden, so dass die Bestimmung noch genauer sein kann.

Um weitere Genauigkeit bei der Bestimmung der Pose und Orientierung der Transportplattform 2 zu erreichen, ist die Steuerung derart ausgelegt, dass die Transportplattform 2 in vorgegebenen Positionen bewegt wird und die Winkelsensoren WS1 bis WS8 in den vorgegebenen Positionen kalibriert werden. Hierbei wird die Transportplattform 2 in einzelne Positionen in Bezug zu dem Hochregallager H bewegt, wo die Winkelsensoren WS1 bis WS8 kalibriert werden. Vorteilhafterweise ist ein externes Referenz-Erfassungssystem vorgesehen, das eine genaue Positionierung der Transportplattform 2 in den vorgegebenen einzelnen Positionen erfasst und gegenüber der Steuerung bestätigt.

Das Referenz-Erfassungssystem umfasst vorzugsweise eine Kamera und Marker. Die Kamera kann beabstandet von der Transportplattform 2 und die Marker können an der Transportplattform 2 angeordnet sein. Anwendungs- oder aufbauspezifisch kann die Kamera auch an der Transportplattform 2 und die Marker können beabstandet von der Transportplattform 2 angeordnet sein. Die Daten des Referenz-Erfassungssystems können in einer Tabelle angelegt werden, so dass eine einmalige Kalibrierung durchführbar ist.

Andererseits können die Daten des Referenz-Erfassungssystems im laufenden Betrieb zur Nachkalibrierung der Winkelsensoren WS1 bis WS8 genutzt werden. Hierbei können die aktuellen Daten mit den abgelegten Daten verglichen werden. Dabei können die angelegten Daten in der Tabelle aktualisiert werden.

Als alternative Ausführung können anstatt der dargestellten Winkelsensoren WS 1 bis WS8 inertiale Messeinheiten, in Form von dreiachsigen Beschleunigungssensoren an den Verbindungsseilenden an der Transportplattform 2 verwendet werden, wobei die dreiachsigen Beschleunigungssensoren jeweils einen Winkel relativ zur Normalkraft bzw. Erdbeschleunigung ermitteln. Unterstützend können hier, insbesondere bei dynamischen Anwendungen, Drehratensensoren verwendet werden, um durch Integration aus den Winkeländerungen Winkelpositionen zu berechnen.

Diese Daten können durch Sensordatenfusion für höhere Genauigkeitsanforderungen je Verbindungsseil S1 bis S8 kombiniert werden.

Alternativ kann auch aus den Daten des dreiachsigen Beschleunigungssensors und dreiachsigen Drehratensensors eine Beschleunigung der Transportplattform 2 in der x-y-Ebene berechnet werden, so dass diese Information für die Lage der anderen Verbindungsseilenden berücksichtigt werden kann. Das heißt, insbesondere in diesem Fall wird nur ein zusätzlicher Drehratensensor für alle sechs bis acht Verbindungsseile S1 bis S8 und sechs bis acht Beschleunigungssensoren an den Verbindungsseilen S1 bis S8 benötigt.

Bezugszeichenliste

| 1 | Fördervorrichtung |
|---|---|
| 2 | Transportplattform |
| 3 | Seilrolle |
| H | Hochregallager |
| h1 - h3 | Vertikaler Abstand der Transportplattform |
| M1 - M4 | Antriebsmotor |
| S1 - S8 | Verbindungsseil |
| WS1 - WS8 | Winkelsensor |
| x1 - x3 | Horizontaler Abstand der Transportplattform |
| xt | Breite der Transportplattform |
| $\alpha$, $\beta$, $\gamma$ | Winkel zwischen einem Verbindungsseil und einer senkrechten Kante der Transportplattform |
| $\varepsilon$ | Kippwinkel der Transportplattform |

**Patentansprüche**

1. Fördervorrichtung (1) zum Befördern von Objekten und/oder Personen, mit einer Transportplattform (2), auf der das Objekt und/oder die Person positionierbar sind,
   mit mindestens vier Antriebsmotoren (M1 - M4), die die Transportplattform (2) bewegen,
   mit mindestens sechs Verbindungsseilen (S1 - S8), die die Transportplattform (2) mit den Antriebsmotoren (M1 - M4) verbindet, wobei die Transportplattform (2) durch Auf- bzw. Abwickeln der jeweiligen Verbindungsseile (S1 - S8) mittels der Antriebsmotoren (M1 - M4) in eine gewünschte Position bewegbar ist,
   mit einer Steuerung, die die Antriebsmotoren (M1 - M4) ansteuert,
   **gekennzeichnet durch** mindestens zwei Winkelsensoren (WS2, WS4),
   wobei je ein Winkelsensor (WS2, WS4) an einem jeweiligen Verbindungsseilende (S2, S4) an der Transportplattform (2) angeordnet ist und jeder Winkelsensor (WS2, WS4) einen Winkel ($\alpha$, $\beta$) zwischen dem jeweiligen Verbindungsseil (S2, S4) und einer jeweiligen senkrechten Kante der Transportplattform (2) als Winkelsignal an die Steuerung kommuniziert.

2. Fördervorrichtung (1) nach Anspruch 1, wobei die Fördervorrichtung (1) einen Seilroboter umfasst.

3. Fördervorrichtung (1) nach Anspruch 1 oder 2, wobei drei Winkelsensoren (WS2, WS4, WS6) vorgesehen sind und von den drei Winkelsensoren (WS2, WS4, WS6) ein Winkelsensor (WS6) zum Bestimmen eines Winkels ($\gamma$) zwischen einer Horizontalen und einer Orientierung der Transportplattform (2) ausgelegt ist.

4. Fördervorrichtung (1) nach einem der vorhergehenden Ansprüche 1 bis 3, wobei mindestens sechs Winkelsensoren (WS1 - WS8) vorgesehen sind, die zur präzisen Bestimmung der Position und einer Orientierung der Transportplattform (2) dienen.

5. Fördervorrichtung (1) nach einem der vorhergehenden Ansprüche 1 bis 4, wobei der Winkelsensor (WS1 - WS8) einen Drehgeber oder eine inertiale Messeinheit umfasst.

**6.** Fördervorrichtung (1) nach Anspruch 5, wobei der Drehgeber einen Single- oder Multiturn-Absolut-Drehgeber umfasst und die inertiale Messeinheit aus einer Kombination aus einem dreiachsigen Beschleunigungssensor, insbesondere einem Neigungssensor und einem dreiachsigen Drehratensensor besteht.

**7.** Fördervorrichtung (1) nach einem der vorhergehenden Ansprüche 1 bis 6, wobei die Transportplattform (2) einen Käfig umfasst, in dem das Objekt mittels Aktoren be- und entladbar ist oder die Person Platz nimmt.

**8.** Fördervorrichtung (1) nach einem der vorhergehenden Ansprüche 1 bis 7, wobei die Antriebsmotoren (M1 - M4) jeweils ein Motorfeedbacksystem umfasst, das Daten zur Bestimmung der bewegten Verbindungsseillänge liefert.

**9.** Fördervorrichtung (1) nach einem der vorhergehenden Ansprüche 1 bis 8, wobei mindestens sechs Seilrollen (3) vorgesehen sind, die die Verbindungsseile (S1 - S8) umlenken.

**10.** Fördervorrichtung (1) nach Anspruch 9, wobei in jeder Seilrolle (3) ein Multiturn-Drehgeber vorgesehen ist, der Daten zur Bestimmung der bewegten Verbindungsseillänge zwischen der Transportplattform (2) und der Seilrolle (3) liefert.

**11.** Fördervorrichtung (1) nach einem der vorhergehenden Ansprüche 8 bis 10, wobei die Steuerung derart ausgelegt ist, dass die Daten der Winkelsensoren (WS1 - WS8), des Motorfeedbacksystems und der Multiturn-Drehgeber der Seilrollen (3) zur Bestimmung der Position der Transortplattform (2) kombinierbar sind.

**12.** Fördervorrichtung (1) nach einem der vorhergehenden Ansprüche 1 bis 11, wobei die Steuerung derart ausgelegt ist, dass die Transportplattform (2) in vorgegebenen Positionen bewegbar ist und die Winkelsensoren (WS1 - WS8) in den vorgegebenen Positionen kalibrierbar sind.

**13.** Fördervorrichtung (1) nach Anspruch 12, wobei ein externes Referenz-Erfassungssystem vorgesehen ist, das eine genaue Positionierung der Transportplattform (2) in den vorgegebenen Positionen erfasst und gegenüber der Steuerung bestätigt.

**14.** Fördervorrichtung (1) nach Anspruch 13, wobei das Referenz-Erfassungssystem eine Kamera und Marker umfasst, und wobei die Kamera beabstandet von der Transportplattform (2) und die Marker an der Transportplattform (2) angeordnet sind oder vice versa.

**15.** Fördervorrichtung (1) nach Anspruch 13 oder 14, wobei die Steuerung derart ausgelegt ist, dass Daten des Referenz-Erfassungssystems in einer Tabelle anlegbar sind, eine Nachkalibrierung der Winkelsensoren (WS1 - WS8) mittels eines Vergleichs mit aktuellen Daten durchführbar ist und die in der Tabelle angelegten Daten aktualisierbar sind.

**Claims**

**1.** Conveying device (1) for conveying objects and/or persons,
with a transport platform (2) on which the object and/or the person can be positioned,
with at least four drive motors (M1 - M4) which move the transport platform (2), having at least six connecting cables (S1 - S8) which connect the transport platform (2) to the drive motors (M1 - M4), the transport platform (2) being movable into a desired position by winding up or unwinding the respective connecting cables (S1 - S8) by means of the drive motors (M1 - M4),
with a controller that controls the drive motors (M1 - M4),
**characterized by**
at least two angle sensors (WS2, WS4),
wherein one angle sensor (WS2, WS4) each is arranged at a respective connecting cable end (S2, S4) on the transport platform (2) and each angle sensor (WS2, WS4) communicates an angle ($\alpha$, $\beta$) between the respective connecting cable (S2, S4) and a respective orthogonal edge of the transport platform (2) as an angle signal to the controller.

**2.** Conveying device (1) according to claim 1, wherein the conveying device (1) comprises a rope robot.

**3.** Conveying device (1) according to claim 1 or 2, wherein three angle sensors (WS2, WS4, WS6) are provided and of the three angle sensors (WS2, WS4, WS6) one angle sensor (WS6) is designed for determining an angle ($\gamma$) between a horizontal and an orientation of the conveying platform (2).

**4.** Conveying device (1) according to one of the preceding claims 1 to 3, wherein at least six angle sensors (WS1 - WS8) are provided which serve for the precise determination of the position and orientation of the conveying platform (2).

**5.** Conveying device (1) according to any of the preceding claims 1 to 4, wherein the angle sensor (WS1 - WS8) comprises a rotary encoder or an inertial measuring unit.

**6.** Conveying device (1) according to claim 5, wherein the rotary encoder comprises a single-turn or multiturn absolute rotary encoder and the inertial measuring unit comprises a combination of a triaxial acceleration sensor, in particular a tilt sensor and a triaxial rotation rate sensor.

**7.** Conveying device (1) according to one of the preceding claims 1 to 6, wherein the conveying platform (2) comprises a cage in which the object can be loaded and unloaded by means of actuators or in which the person takes a seat.

**8.** Conveying device (1) according to any of claims 1 to 7 above, wherein the drive motors (M1 - M4) each comprise a motor feedback system which provides data for determining the moving connecting cable length.

**9.** Conveying device (1) according to one of the preceding claims 1 to 8, wherein at least six cable pulleys (3) are provided which deflect the connecting cables (S1 - S8).

**10.** Conveying device (1) according to claim 9, wherein a multiturn encoder is provided in each rope pulley (3), which encoder supplies data for determining the moved connecting rope length between the conveying platform (2) and the rope pulley (3).

**11.** Conveying device (1) according to one of the preceding claims 8 to 10, the control being designed such that the data of the angle sensors (WS1 - WS8), the motor feedback system and the multiturn rotary encoders of the cable pulleys (3) can be combined to determine the position of the transport platform (2).

**12.** Conveying device (1) according to one of the preceding claims 1 to 11, the control being designed such that the conveying platform (2) can be moved in predetermined positions and the angle sensors (WS1 - WS8) can be calibrated in the predetermined positions.

**13.** Conveying device (1) according to claim 12, wherein an external reference detection system is provided, which detects an exact positioning of the conveying platform (2) in the predetermined positions and confirms this to the controller.

**14.** Conveying device (1) according to claim 13, wherein the reference detection system comprises a camera and markers, and wherein the camera is spaced from the transport platform (2) and the markers are located on the transport platform (2) or vice versa.

**15.** Conveying device (1) according to claim 13 or 14, the controller being designed such that data of the reference detection system can be created in a table, a recalibration of the angle sensors (WS1 - WS8) can be carried out by means of a comparison with current data, and the data created in the table can be updated.

**Revendications**

**1.** Dispositif de transport (1) pour le transport d'objets et/ou de personnes,
avec une plateforme de transport (2) sur laquelle l'objet et/ou la personne peut être positionné,
avec au moins quatre moteurs d'entraînement (M1 - M4) qui déplacent la plateforme de transport (2),
avec au moins six câbles de raccordement (S1 - S8) qui relient la plateforme de transport (2) aux moteurs d'entraînement (M1 - M4), la plateforme de transport (2) étant mobile dans une position souhaitée par enroulement ou déroulement des câbles de raccordement respectifs (S1 - S8) au moyen des moteurs d'entraînement (M1 - M4),
avec un contrôleur qui commande les moteurs d'entraînement (M1 - M4), **caractérisé par**
au moins deux capteurs d'angle (WS2, WS4),
dans lesquels un capteur d'angle (WS2, WS4) est disposé chacun à une extrémité de câble de connexion respective (S2, S4) sur la plateforme de transport (2) et chaque capteur d'angle (WS2, WS4) communique un angle ($\alpha$, $\beta$) entre le câble de connexion respectif (S2, S4) et un bord vertical respectif de la plateforme de transport (2) comme signal angulaire au régulateur.

**2.** Dispositif de transport (1) selon la revendication 1, **caractérisé en ce que** le dispositif de transport (1) comprend un robot à câble.

**3.** Dispositif de transport (1) selon la revendication 1 ou 2, dans lequel trois capteurs angulaires (WS2, WS4, WS6) sont prévus et, parmi les trois capteurs angulaires (WS2, WS4, WS6), un capteur angulaire (WS6) est conçu pour déterminer un angle ($\gamma$) entre une orientation horizontale et une orientation du plateau de transport (2).

**4.** Dispositif de transport (1) selon l'une des revendications précédentes 1 à 3, dans lequel au moins six capteurs angulaires (WS1 - WS8) sontt prévus pour la détermination précise de la position et de l'orientation de la plateforme de transport (2).

**5.** Dispositif de transport (1) selon l'une quelconque des revendications précédentes 1 à 4, dans lequel le capteur angulaire (WS1 - WS8) comprend un codeur rotatif ou une unité de mesure inertielle.

**6.** Dispositif de transport (1) selon la revendication 5, dans lequel le capteur rotatif comprend un capteur rotatif absolu monotour ou multitours et l'unité de mesure inertielle comprend une combinaison d'un capteur d'accélération triaxiale, en particulier un capteur d'inclinaison et un capteur de vitesse de rotation triaxiale.

7. Dispositif de transport (1) selon l'une des revendications précédentes 1 à 6, dans lequel la plateforme de transport (2) comprend une cage dans laquelle l'objet peut être chargé et déchargé au moyen d'actionneurs ou dans laquelle la personne prend place.

8. Dispositif de transport (1) selon l'une des revendications précédentes 1 à 7, dans lequel les moteurs d'entraînement (M1 - M4) comprennent chacun un système de rétroaction de moteur qui fournit des données pour déterminer la longueur du câble de raccordement mobile.

9. Dispositif de transport (1) selon l'une des revendications précédentes 1 à 8, dans lequel au moins six poulies de câble (3) sont prévu qui déviennent les câbles de raccordement (S1 - S8).

10. Dispositif de transport (1) selon la revendication 9, dans lequel un codeur multitours est prévu dans chaque poulie de câble (3), qui fournit des données pour déterminer la longueur de câble de liaison déplacée entre la plateforme de transport (2) et la poulie de câble (3).

11. Dispositif de transport (1) selon l'une des revendications précédentes 8 à 10, dans lequel la commande est conçue de telle sorte que les données des capteurs angulaires (WS1 - WS8), du système de retour moteur et des capteurs rotatifs multitours des poulies à câble (3) peuvent être combinées pour déterminer la position de la plateforme de transport (2).

12. Dispositif de transport (1) selon l'une des revendications précédentes 1 à 11, dans lequel la commande est conçue de telle sorte que la plateforme de transport (2) peut être déplacée dans des positions prédéterminées et les capteurs angulaires (WS1 - WS8) peuvent être étalonnés dans les positions prédéterminées.

13. Dispositif de transport (1) selon la revendication 12, dans lequel un système de détection de référence externe est prévu, qui détecte un positionnement exact de la plateforme de transport (2) dans les positions prédéterminées et le confirme au contrôleur.

14. Dispositif de transport (1) selon la revendication 13, dans lequel le système de détection de référence comprend une caméra et des marqueurs, et dans lequel la caméra est espacée de la plateforme de transport (2) et les marqueurs sont situés sur la plateforme de transport (2) ou inversement.

15. Dispositif de transport (1) selon la revendication 13 ou 14, dans lequel le régulateur est conçu de telle sorte que les données du système de détection de référence peuvent être créées dans un tableau, un recalibrage des capteurs angulaires (WS1 - WS8) peut être effectué par comparaison avec les données actuelles et les données créées dans le tableau peuvent être actualisées.

Figur 1

Figur 2

Figur 3

Figur 4

**EP 3 366 431 B1**

**IN DER BESCHREIBUNG AUFGEFÜHRTE DOKUMENTE**

**In der Beschreibung aufgeführte Patentdokumente**

- DE 102010015530 A1